(19) Europäisches Patentamt
European Patent Office
Office européen des brevets

(11) EP 2 517 799 B1

(12) **EUROPEAN PATENT SPECIFICATION**

(45) Date of publication and mention
of the grant of the patent:
**19.11.2014 Bulletin 2014/47**

(51) Int Cl.:
*B21B 38/02* (2006.01)    *G01B 11/25* (2006.01)
*G01B 11/30* (2006.01)

(21) Application number: **11163746.8**

(22) Date of filing: **26.04.2011**

(54) **Apparatus and method for industrial online micro-topography and waviness measurements on moving products**

Vorrichtung und Verfahren für die industrielle online Mikrotopografie und Welligkeitsmessungen sich bewegender Produkte

Appareil et procédé pour la mesure en ligne industrielle de la micro-topographie et de l'ondulation des produits en mouvement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.10.2012 Bulletin 2012/44**

(73) Proprietor: **Centre de Recherches Métallurgiques asbl -
Centrum voor Research in de Metallurgie vzw
1000 Bruxelles (BE)**

(72) Inventor: **Moreas, Geneviève
4520 Wanze (BE)**

(74) Representative: **Pronovem
Office Van Malderen
Parc d'affaires Zénobe Gramme- bâtiment K
Square des Conduites d'Eau 1-2
4020 Liège (BE)**

(56) References cited:
**DE-A1- 19 932 324    US-A1- 2009 153 878
US-B1- 6 556 945**

- **MOREAS G ET AL: "Advanced sensor for on-line topography in continuous lines", REVUE DE METALLURGIE - CAHIERS D'INFORMATIONS TECHNIQUES, REVUE DE METALLURGIE. PARIS, FR, vol. 103, no. 5, 1 May 2006 (2006-05-01), pages 233-237, XP009150783, ISSN: 0035-1563**
- **SPAGNOLO G S ET AL: "Diffractive optical element based sensor for roughness measurement", SENSORS AND ACTUATORS A, ELSEVIER SEQUOIA S.A., LAUSANNE, CH, vol. 100, no. 2-3, 1 September 2002 (2002-09-01), pages 180-186, XP004374971, ISSN: 0924-4247, DOI: 10.1016/S0924-4247(02)00051-1**

## Description

## Field of the invention

The present invention relates to a method for accurate online measurement of the waviness of an industrial moving product surface based on microscope techniques.

The invention also relates to an apparatus for carrying out the method.

## Technical background and prior art

It is known that a surface topography basically refers to horizontal and vertical information on height variation of a surface, which can be divided into (micro) roughness (Ra) and waviness (Wa). Generally roughness is defined to include only height variations having a horizontal spacing or wavelength of 5 to 10 times the vertical peak-to-valley distance, corresponding to wavelengths classically below 2.5 mm.

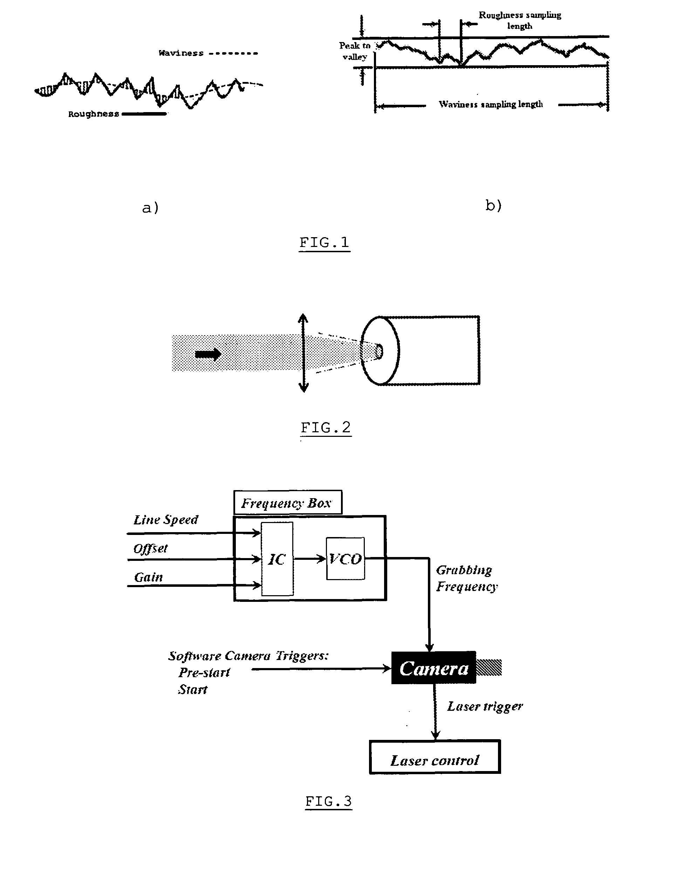

Waviness, on the other hand, refers to structural components with longer wavelengths, approximately between 1 and 30 mm (see FIG.1).

Waviness means, in general, a shape deviation of a surface in the wavelength range above the roughness, i.e. the shape above the usual cut-off frequency (Lc) of mostly 0.8 or 2.5 mm in case of steel.

If the waviness of a steel sheet is above predefined limits, the steel user does not accept the product because it causes scrap or bad quality in further processing, such as deep drawing, painting or brushing. As waviness, except for high glossy surfaces, is mostly not eye visible before painting, a measurement is required to evaluate its level. Nowadays, this is done by the use of profilometers on static samples from the tail or the head of some coils. However this measurement is usually not available for the whole coil and, moreover, is only realised on some ones (1 out of 5 in average). Nevertheless, waviness value is becoming more and more important for the customers, especially those of the automotive industry, who require better quality to avoid scrap and to try to put less painting on the steel product without losing aspect quality.

Document JP 6307840 A discloses a method for contactless measurement of roughness and waviness of a surface having high feed speed such as in an online process for metal rolling, by using a sensed error signal as a focal error signal for servomotions through calculation till the high frequency band. Accordingly a fine surface unevenness of a steel plate is sensed as a focal error from the focus position and included in the surface unevenness signal. By a band pass filter this signal is divergently emitted in respective roughness and waviness signals.

Document US 6,556,945 B1 discloses a system for measuring unevenness formed by grooves and/or long waves in a surface of an object by using a measuring platform. The system moves the object and the measuring platform relative to each other and projects from the measuring platform a light streak that extends in a direction of the movement onto a surface of the object at a fixed projection angle that is tilted relative to a surface normal of the surface. The light streak is reproduced on a planar, position-sensitive photo receiver with a plurality of successive instantaneous exposures of the photo receiver, where the photo receiver is fixedly arranged on the measuring platform with a recording angle that is tilted relative to the fixed projection angle. The system records the surface along the direction of the movement with a plurality of continuous light-streak images and determines a surface profile of the surface along the direction of the movement from deformations in the plurality of the light-streak images.

Document G. Moreas et al., "Advanced sensor for on-line topography in continuous lines", La Revue de Métallurgie-CIT, vol. 103, No. 5, May 2006, pp. 233-237, discloses a sensor, developed by CRM in collaboration with Sidmar, grabbing highly magnified images of a moving steel strip product. The advanced sensor provides the opportunity, by real time analysis of the surface, to enhance the production quality. It gives information that can be used to adjust production conditions and to reach the roughness Ra range required by the customer.

Document DE 199 32 324 A1 discloses a process for determining the waviness and/or the planarity of a strip that comprises judging the position of the surface of the strip point-wise and/or line-wise in a space, modeling a virtual bearing surface to this surface, and judging the waviness from the deviations of the surface from the bearing surface. An independent claim is also included for a device incorporating a distance measurer for determining the waviness and/or the planarity of a strip.

## Aims of the invention

The present invention aims at implementing an on-line system for measuring the waviness of an industrially manufactured strip such as a steel strip and recognising its type during the production process.

It also aims to be used for any product for which long micro-height profile would have to be measured.

## Summary of the invention

A first aspect of the present invention relates to a microscope sensor for carrying out the method for contactless measuring the waviness (Wa) of a moving surface, as above, comprising:

- an industrial microscope having a magnification suitable to obtain an image field of view in the range of 1000 $\mu$m and/or a resolution of at least 0.5 $\mu$m, a working distance greater than 10 mm and a field depth greater than 15 $\mu$m ;
- a pulsed nanosecond laser source with a frequency of at least V/(FOV-O) in s-1, where V is the maximum speed of the surface, in m/s, FOV is the field of view in the direction of movement, in m and O the overlapping between successive images in m, for emitting a beam through fibre optics so that to project a micrometric line superposed to a background illumination, said projected line being essentially parallel to the direction of movement ;

- a fibre coupling for coupling each fibre optic to the laser using a plano-convex lens designed to focus essentially all the laser beam into the core of the fibre in the limit of energy density supported by the fibre ;

- a high speed matrix camera having at least the same frequency as the laser frequency, a field of view adapted to the required precision, preferably of at least 600 μm, and suitable optics with a spatial resolution of 0.5 μm ;

- focusing means comprising a distance sensor ;

- at least a high precision positioning table for focusing ;

- electronic control means for external synchronisation of the camera and the laser and for recalculating the frequency of the synchronisation signal in real time ;

- hardware and/or software means cooperating with the matrix camera for grabbing at high frequency a plurality of individual images of the moving surface with a side overlapping, each of said images being obta ined, under an illumination background, by estimating a profile of the surface from the deformation of a laser line projected on the surface at a given angle and essentially parallel to the direction of movement ; for stitching successive images, and for line adjustment, so that to obtain a raw surface profile of minimal profile length defined by a high cut-off frequency value ; for filtering the raw surface profile, so that to separate roughness and waviness data and for calculating roughness and waviness parameters.

According to particular embodiments, the sensor further includes one or an appropriate combination of the following characteristics:

- the means for filtering the profile comprise a Gaussian-like filter of "n" magnitude, n being an integer ;

- the sensor comprises means for synchronizing the grabbing frequency with the speed of the moving surface ;

- the means for stitching successive images comprise a transformation model comprising a translation estimated between two consecutive images using a correlation technique and a FFT algorithm ;

- the sensor comprises means for evaluating a translation vector comprising illumination background with subwindows which do not contain the laser line ;

- the sensor comprises means for adjusting the directions of line projection and camera optical axis ;

- the sensor comprises means for adjusting the camera orientation, so that the stitching displacement orthogonal to the movement direction is close to zero pixel ;

- the sensor comprises means for adjusting the projected line to the movement direction comprising a high precision rotation table combined with a FFT analysis, so that to obtain extinction of the FFT peak at the length of stitching ;

- the sensor comprises means for realising a homogeneous laser background and line projection illumination ;

- the sensor comprises means for tilting the optical axis of the microscope sensor about the orthogonal to the surface by an angle in the range from 4 to 24 degrees, preferably from 12 to 18 degrees.

Another aspect of the present invention relates to a method for contactless measuring the waviness (Wa) of a moving surface, based on the use of a microscope sensor, as described above, using a surface minimal profile length and respective low and high cut-off frequency values, said minimal profile length being at least 6 times the high cut-off value, the high cut-off value being equal to 5 mm, comprising the steps of:

- grabbing at high frequency, by means of a high speed camera, a plurality of individual images of the surface with a side overlapping, said images being obtained by means of a high resolution triangulation method in which, for each image, under an illumination background, a profile of the surface is estimated by the analysis of the deformation of a laser line projected on the surface at a given angle, said projected line being essentially parallel to the direction of movement ;

- stitching said plurality of images together to obtain a stitched image corresponding to a profile having a length of at least said minimal profile length ; and

- filtering said profile by analysis of the stitched image ; characterised in that the projected line is adjusted to the movement direction by use of a high precision rotation table combined with a FFT analysis, so that to obtain extinction of the FFT peak at the length of stitching.

## Short description of the drawings

FIG.1, already mentioned, schematically represents roughness and waviness profiles respectively.
FIG.2 schematically represents the illumination of the laser-coupled fibre according to the present invention.
FIG.3 is the schematics for synchronisation signal.
FIG.4 is the schematics for the laser optical mounting.

FIG.5 is the schematics for general acquisition and control unit.

FIG.6 schematically illustrates the stitching principle.

FIG.7 schematically illustrates a slight misalignment in projected line.

FIG.8 shows the effect of different window sizes.

FIG.9 shows the result of the stitching of two consecutive images.

FIG.10 shows a sample of roughness and waviness profiles measured in laboratory.

FIG.11 shows optical Ra in function of Ra stylus.

FIG.12 shows optical Wa in function of Wa stylus.

FIG.13 shows the mechanical implantation principle according to the invention.

FIG.14 shows an example of surface parameter calculation obtained with dedicated algorithms for adjustment.

FIG.15 shows a comparison between Wa from Wavimeter™ and TalySurf mechanical measurements

FIG.16 shows a comparison of Wavimeter™ and mechanical measurements during a variation of production parameters.

## Detailed description of the invention

The scientific and technological advantages of the developed sensor according to the present invention, called Wavimeter™, consist in the implementation of an accurate on-line measurement of a product waviness, and more specifically a strip waviness, based on microscope techniques. The latter can be used to constitute a database for evaluating the parameters influencing the waviness and to determine the interdependencies between these parameters in order to get a better understanding of the physical mechanisms influencing the surface, leading to the definition of guidelines to control the waviness and to improve the process, and to define a common reference for producers and customers as well.

Some studies have concluded that an online waviness measuring system should normally measure a surface profile length of minimal 30 mm with a point density $\geq$ 300 points/mm, using a low cut-off of 1 mm and a high cut-off of 5 mm. This seems to be a minimum presently, while the Wavimeter™ is able to reach higher specifications.

The comparison of the laboratory measurements, all done along rolling direction, has validated a Ra, calculated for example with a high cut-off of 2.5 mm, and a Wa calculated for example with a low cut-off of 1mm and a high cut-off of 5 mm (thus equivalent to a bandpass filter), on a length of 45 mm maximum.

To calculate waviness and separate it from roughness, filtering the profile is required. In general, the Gaussian filter is to be preferred as it is "phase-correct", i.e. it does not introduce phase distortion into the transmitted wave. Various implementations of this filter have been tested to optimise time processing. The result was the choice of a Gaussian-like filter of "n" magnitude order for laboratory implementation and on-line measurements.

Because it is extremely costly and difficult to design a vision system having a high resolution and a large field of view at the same time, the method adopted according to the present invention combined two techniques. The first one is a high resolution triangulation method previously used in EP 1 429 114 in which the profile of the surface is measured by the analysis of the deformation of a laser line projected onto the surface at a known angle (in the so-called Topometer™ project, see also for example BE 1 014 971, WO 02/101366 A1, EP 1 806 558). The field of view width is in the range of 1 mm, linked to the current specifications of the camera, the aim being to reach a pixel precision in the range of 0.5 $\mu$m. The adding of the Wavimeter™ consists in the high frequency grabbing of a series of such images with a slight recovery. These images, whose background is visible through the use of adequate illumination, are then "stitched" together to get the required length of measurement. As the minimum profile length to consider in waviness measurements using a projected line is very large (about 45 mm and greater), reducing the magnification (or the resolution) of the microscope sensor is not a solution, because of a huge loss of information in height and thus in resolution. Otherwise a very long CCD array sensor would be necessary to keep the high resolution required for Wa measurements, which would be very expensive.

To apply the defined method, following the general specifications for the waviness measurements, Wavimeter™ integrates/uses a high speed camera and a high speed laser.

A high precision external synchronisation technique, based on the conversion of speed signal to continuously reach the defined recovery amount between individual images, is used to synchronize very precisely the grabbing frequency with the speed of the product. This results in a nearly constant amount of pixels of recovery from image to image. This leads so in a higher speed of computation for the stitching as the stitching area is not changing a lot.

High attention has also been given to the quality of the used optical components and the stability of the used mountings to reach a configuration as stable as possible. Indeed, stable lighting of the background and stable level of projected line gives higher stability in the results with time. The system is multitasking by the combination of multiple processes in parallel: checking the security position, deciding the adequate acquisition moment, grabbing images, calculation of Ra and Wa values.

In parallel, stitching techniques have been used. Image stitching is usually defined as the process of combining multiple photographic images with overlapping fields of view to produce a segmented panorama or a high resolution image. Stitching algorithms refer to a set of techniques used to recover a large image from a set of smaller ones. It is commonly used for instance to recover a full panorama based on a set of pictures taken with a camera. In the present project, the necessary trade-off between resolution and field of view is impossible to handle without using such techniques.

In a preferred embodiment, the used stitching method is based on a simple transformation model which consists in a translation which is estimated between two consecutive image using a correlation technique and FFT algorithms. In this embodiment, no rotation or change in zoom is considered. This is realistic because the optical configuration of the acquisition device is otherwise very well controlled. But a more complex transformation model can be considered according to the invention, if required.

Moreover, the stitching is preferentially realised on a sub-window not including the projected line and bright spots areas resulting from it.

A noticeable feature to take into account according to the invention is the orientation of the laser line compared to the strip direction. Ideally, the laser line should be exactly projected in the direction of the strip movement, so that acquiring several successive images would be equivalent to project a longer laser line on a larger field-of-view.

Thus, according to the present invention, the camera and the projected line are chosen adjustable so that to perfectly align the system.

The camera is preferentially oriented so that the transverse stitching displacement (orthogonal to rolling direction) is minimized. This helps the processing procedure in terms of time and of available common subwindows in two successive images

The line direction is preferentially adjusted through the use of a high precision rotation table, on which the line projection optics is fixed combined to an FFT analysis of the resulting stitched image. Orientating properly the line in the rolling direction will result in the extinction of the frequency peak at the length of stitching.

The homogeneity of the background illumination must be good as it plays a role in the quality of stitching.

The suitable choice of the initial parameters in the search of the displacement between matching and displaced windows is a very important factor in order to reduce the processing time. Specific algorithms have been implemented depending on the type of texture for example.

A fast algorithm implementation for computation of the displacement vector between two subsequent images, and the generation of the stitched image made of a set of adjacent images, has been optimised. It is based on the FFT-based CCN algorithm.

The first thing to do when the sensor is installed is to adjust its global position. This is done through the use of a distance sensor signal and the positioning tables supporting the core of the sensor. This signal is minimal when the optical axis is orthogonal to the roll surface.

Specific algorithms have been written to adjust the Wavimeter™ position on line. The focus is secondly checked by blurring evaluation. The camera inclination is modified on the basis of the stitching translation values. The triangulation line is aligned along rolling direction by the analysis of the profile spectrum.

Depending on the reflectivity of the product, again according to the invention, the whole sensor can be tilted to collect higher amount of specular reflexion. The grabbed images are then far better and the fill factor of the detected line too. Even with the small focus depth, the resulting image does not appear blurred in the region of interest. This solution results in a small loss of precision in the measurement due to inclination. It is a compromise between a good fill factor resulting in a better measurement with less interpolation between loosing points and a better precision.

On-line industrial tests have validated the method on moving products with a correlation factor of 0.71 and a dispersion of +/-10%.

## Description of preferred embodiments

### 1. General requirements

To be able to measure a large number of types of waviness, a longer length of measurement is required in comparison with roughness measurement: ideally, according to good practice, 6 times the high cut-off chosen for the filtering.

The stitching algorithm requires an amount of overlapping image from image. Preferably, a recovery in a range of 50 pixels will be used. It has been determined by image analysis of the database constituted in laboratory.

The grabbing frequency has to take into account that defined overlapping. Considering a field of view of $W$ ($\mu$m) with $p$ pixels, a line speed of $v$ (m/min) and a recovery of $r$ pixels, the grabbing frequency must be:

$$(p/(p-r))*v*10^6/60/W.$$

For example, considering a field of view of 850$\mu$m and 850 pixels, an overlapping amount of 50 pixels and a maximum speed of 180m/min on a galvanising line, the frequency of grabbing should be 3.75kHz.

### 2. Camera requirements

The chosen camera must reach the calculated frequency, depending on the specific application, using at least part of the pixels array, keeping the required precision along the line direction.

### 3. Laser requirements

The chosen laser source, for example a laser working at 532nm, as in the Topometer™ one (see for example patent application BE2002/0192), must have a pulse width that corresponds to a move of ideally maximum ½ pixel (to optimize stitching) or possibly to 2.5 $\mu$m (corresponding to the half of the stylus diameter reference). The laser must also reach the grabbing frequency. The laser source may consist in one or several laser diodes directly located in the sensor head.

### 3.1. Fibre coupling of laser

Like in the Topometer™, the laser source is splitted in minimum two beams: one used for the line projection and the second one for the background illumination. To minimize the laser energy level requirements, improvement of coupling has been done using a plano-convex lens to focus the laser beam precisely into the core of the fibre in the limit of energy density supported by the fibre. The focal length of the lens has been chosen so that the convergence angle of the focused beam matches the acceptance angle of the fibre. This ensures that only little light propagates through non-transmitting modes of the fibre, and that the core of the fibre is illuminated with the focused beam (FIG.2).

The drawback of this system is an increased sensitivity towards the positioning of the focused beam with regard to the fibre core. The illumination angle and the focus distance are also very sensitive parameters. Anyway, good practice allows the skilled person to avoid any problems.

### 3.2. Synchronisation mode of camera and laser

As the laser pulse must be very short to "freeze" the image of a moving product, it is important to have a good synchronisation of the camera and the laser, in order to be able to correctly "catch" the pulse during the exposition time of the camera. Otherwise, the camera misses the pulse and the recorded image is not usable (black image).

Two modes of synchronisation are available for driving the camera: internal and external modes. The internal synchronisation uses an internally generated signal, which is adjustable by the user through a software interface. The external synchronisation uses an external signal that can be used to synchronise other devices.

### 3.3. Synchronisation signal

The frequency of this signal can be fixed or variable in function of speed. If it is fixed, it has to be sufficiently high to keep the overlapping amount for the higher speed. This will result in a very high amount of overlapping for low speed, resulting so in a high number of images stored. This implies that, for a line of contiguous images, the overlapping can highly vary inducing more calculations to eliminate the extra images.

The frequency can be recalculated each time the speed changes to keep the amount of overlapping in the same range. So, the number of stored images will be relatively constant and no extra calculations will be required. On the contrary, this will help the stitching algorithm by reducing the area of research.

However calculating continuously in real time this frequency through the PC is not the best choice for a question of real time change. It has been replaced by the use of a VCO (*Voltage Controlled Oscillator*) associated with an integrated circuit that combines the speed and two programmable factors: Gain and Offset (FIG.3). These two last parameters can be changed through the PC to promptly modify the amount of overlapping.

### 3.4. Optical mounting for the laser

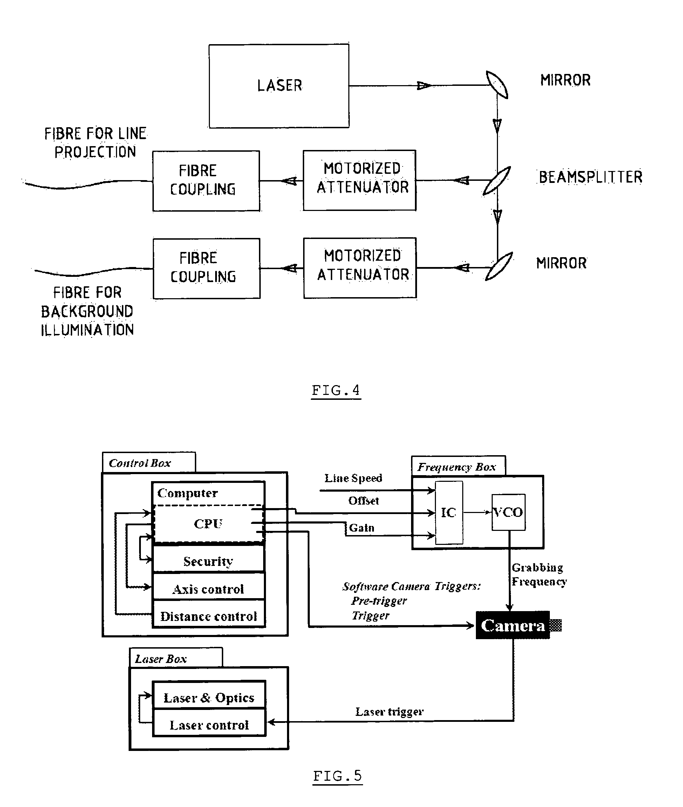

The scheme of optical mounting for the laser is shown in FIG.4. To compact the system, mirrors have been used. A beamsplitter divides the energy in two beams to a first fibre for line projection and to a second fibre for background illumination. A motorised attenuator has been added in each optical path to be able to modify independently from the PC the intensity of the line and of the background.

This mounting can be used in combination with automatic evaluation of line and background levels to modify it online in function of the product surface.

To improve the resistance to vibrations, the translation tables on which fibres are connected have lockable position.

### 3.5. Acquisition and control unit (FIG.5)

Considering that n images are required to cover the desired length with a defined overlapping amount, the camera is used in cycle mode. In a first step, the camera is pre-triggered by the PC. It will acquire images and store them in a cycle buffer of n images size.

When a complete cycle of acquisition is done, the first time the focus point is reached, the PC triggers the camera again. This second step is completed when n/2 images are acquired.

In that way, the buffer of the camera consists in n/2 images acquired before focus and n/2 images acquired after focus. A priori, this is the best way to obtain a line of better focused images.

One possibility is to control the grabbing sequence by the PC only at three times: the pre-trigger that is not critical in time, the trigger which is more critical and the completion of acquisition which is not critical too. Some operations can be advantageously delegated to an external control system like a PLC.

The critical trigger signal is continuously checked by the PC through the acquisition of the distance signal. But it could be implemented as well in an external hardware to directly control the camera.

During this step, the other operation in charge of the computer is the speed acquisition for post saving and the check of security signals to take the system off if required.

## 4. Wavimeter™

The sensor is completed by a system used to control the support on which the sensor head is fixed. This system will allow to position the sensor near the product when measurement is possible and to take it off when line incidents occur (heat buckles, etc.).

For a running stable on the long time, it has been highlighted that a stable temperature must be maintained inside the measuring head. This is achieved preferentially using a heating/cooling Peltier system.

Keeping the inclination between the line and the optical axis of the camera, ideally between 30 and 60 deg. depending on the resolution to reach on high reflective products, the whole sensor can be tilted in such a way that more of the "specular" reflexion can reach the camera, resulting in a better result.

## 5. Image stitching

### 5.1. Stitching requirements

As a matter of fact, a very high resolution is necessary to capture the deviation of the laser line with an accuracy compatible with Wa measurements. The typical order of magnitude for Wa values on flat products is between 0.2 and 1 $\mu$m. Nevertheless, Wa is a measurement referring generally to quite large wavelengths (around 1mm and greater), and a long profile, typically 6 times the maximum wavelength (for example 5mm) is therefore needed to calculate the wave amplitude.

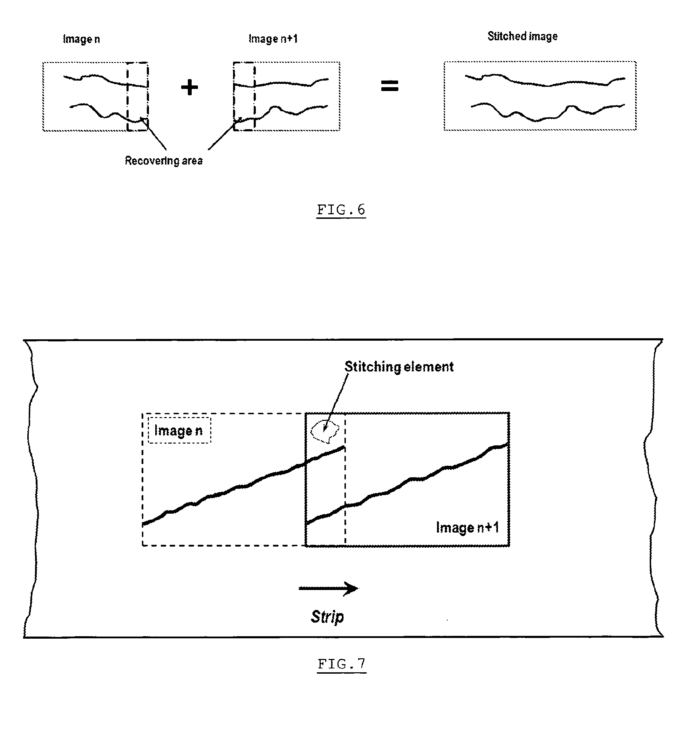

Because it is extremely costly and difficult to design a vision system with a high resolution and a large field of view at the same time, the method detailed herein keeps the resolution aspect for the hardware part (camera, optical system), and recovers the large field of view property by stitching consecutive recovering images (FIG.6).

Stitching algorithms already exist in various image processing fields. These algorithms have presently to fulfil specific conditions:

- to be precise enough to reconstruct an accurate waviness profile ;
- to be fast enough for a real time processing.

The basic principle of stitching algorithms usually involves several steps:

- pre-processing of the images ;
- estimation of a transformation from one image to another (usually, the transformation is a parametric model whose parameters have to be estimated) ;
- mixing of the two images based on the estimated transformation to reconstruct a stitched image ;

- post-processing of the images to obtain higher-level data.

### Reconstruction of a stitched "image" - transformation model

Once the overlapping area has been computed accurately through a stitching transformation model, it is possible to "reconstruct" the information on the overlapping area using all information at disposal. Either the average of grey level of two images $I_0$ and $I_1$ or the grey level of one source can be computed in the overlapping area.

According to a preferred embodiment of the present invention, the stitching method used in the present invention is based on:

- a simple transformation model which is a translation of vector **p**. No rotation or change in zoom is considered. This is realistic because the optical configuration of the acquisition device is very well-controlled ;
- the vector **p** of this transformation is estimated between two consecutive image using a correlation technique and FFT algorithms ;
- the fusion of data on the overlapping area is done by averaging the two images ;
- the process can be easily iterated to stitch more images.

### Slight misalignments

Ideally, the laser line would be exactly projected in the direction of the strip movement, so that acquiring several successive images would be equivalent to project a longer laser line on a larger field of view. However, this alignment is difficult to perfectly setup without a specific control device. In experimental acquisitions, a slight misalignment is almost each time visible (FIG.7).

This phenomenon is a problem in itself, because it means that the reconstructed profile will not be fully continuous. But before the profile reconstruction step, this misalignment can induce artefacts in the computation of vector **p** if the region used for evaluate stitching includes the line. Because the laser line is linked to the field of view, it does not follow the same translation as the background image. The stitching will so be applied on regions not including the line, so, the correlation between the background of the first image and the background of the second image can be maximised and the misalignment of the laser line can also become visible.

To allow perfect alignment of the system, the camera and the projected line are adjustable according to the present invention.

For the camera, concerning its orientation in the focal plane, no automatic system is implemented. The camera can be oriented by the use of thin plates placed on the adequate side between the camera and its support. The adjustment is optimised when the transverse stitching displacement (orthogonal to rolling direction) is near 0 pixels.

The line direction can be adjusted through the use of a rotation table on which the line projection optics is fixed combined to an FFT analysis of the resulting stitched image. Indeed, if the line is not perfectly in the rolling direction, it will result in the stitched image in a profile with steps appearing at the length of stitching (which is constant as the grabbing frequency is directly linked to the speed product). These steps will appear in the FFT profile of both Wa and Ra profiles. Orientating the line in the rolling direction will result in the extinction of the concerned peak (not shown).

*Size of matching window*

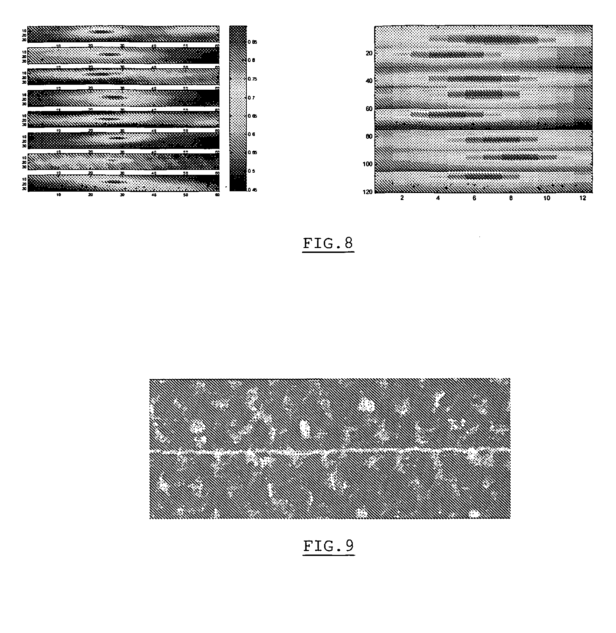

The suitable choice of the initial parameters in the search of the displacement between matching and displaced windows is a very important factor in order to reduce the processing time. For example, the size of the matching window is critical, seeing that the number of Standardized Crossed Correlation and comparisons needed is directly affected. In this area, several improvements were attained. In FIG.8, two windows sizes are shown ; the left plane illustrates the window size used in previous trials whilst the right one indicates the window size used in the last software version which, being much smaller, provides shorter computing time.

The selection of the window size is only possible after several trials and an exhaustive study working with the particular images conditions, so it may vary depending on the different implementations.

With this smaller window size, the system can be sure than the maximum value will fit on it, but it must take into account another important parameter: the initial displacement of the displaced window.

This displacement is calculated into an iterative process looking the previous values of the displacement. This improvement permits to considerably reduce the time needed.

*5.2. Results of stitching process*

The used algorithms in addition to the choice of the right parameters (size of patches, range of admissible translations, normalization) and specific tuning (sub-pixel interpolation) have enabled to obtain good results in the stitching process in a reasonable amount of time (FIG.9).

*5.3. C++ implementation and optimisation*

A fast algorithm implementation for computation of the displacement vector between two subsequent images, and the generation of the stitched image made of a set of adjacent images, has been done.

The developed software has at least the following features:

- displacement vector computation with use of an efficient FFT library and "static memory" implementation to decrease time consuming memory ;
- dynamic construction of the stitched image, with possibility of recording only a region of interest (ROI) around the line, which increases execution speed and reduces memory requirements ;
- physical data arrangement in memory to allow the stitched image to grow without need of recopying it each time, etc.

6. Stitched image analysis

Once a complete stitched image has been acquired, the line present in the image has to be isolated for further analysis. The algorithms initially developed for Topometer™ (see above) have been adapted to the higher size of image but also to the presence of potential slope of line in the stitched image.

Specific techniques based on linear regression and filtering on standard deviation have been implemented.

*6.1. Profile analysis*

When the line is found, a raw profile is available for further calculations. Having this profile, roughness and waviness parameters can be extracted.

To calculate waviness and separate it from roughness, filtering the profile is required. In general, the Gaussian filter is to be preferred as this is phase-correct, i.e. it does not introduce phase distortion into the transmitted wave.

7. Validation on industrial samples in laboratory

*7.1. Validation of the method on static samples*

The validation principle on static samples consists in:

- displacing the sample in the line direction to simulate online moving ;
- taking an image after each displacement ;
- stitching all the grabbed images ;
- analysing the resulting image to find the line and get the profile ;
- filtering the profile with adequate cut-offs ;
- calculating the Ra and Wa ;
- comparing the obtained values with the measurements given by classical offline laboratory methods.

*7.2. Mounting and conditions of test*

The Topometer™ has been used for optical measurements. Each sample is mounted on a system composed by 2 translation tables and one rotation table (not shown). This allows:

- to place the sample surface perfectly in a plane orthogonal to the optical axis ;
- to move the sample in the direction of measurement ;
- to move the sample to measure on parallel lines to compare results obtained at different positions.

The profiles of a series of samples have then been reconstructed (stitching, line detection, filtering). The images have been acquired preferably with a recovery of 50 µm image to image.

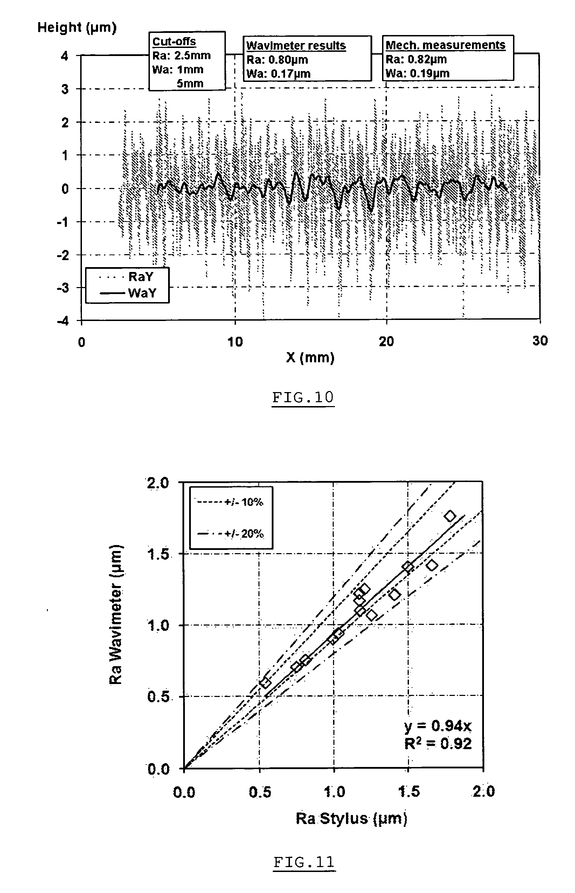

FIG.10 shows the type of profile obtained on the sample with the Wavimeter™ method. The Wavimeter™ values of Ra and Wa are very near to the mechanical measurements.

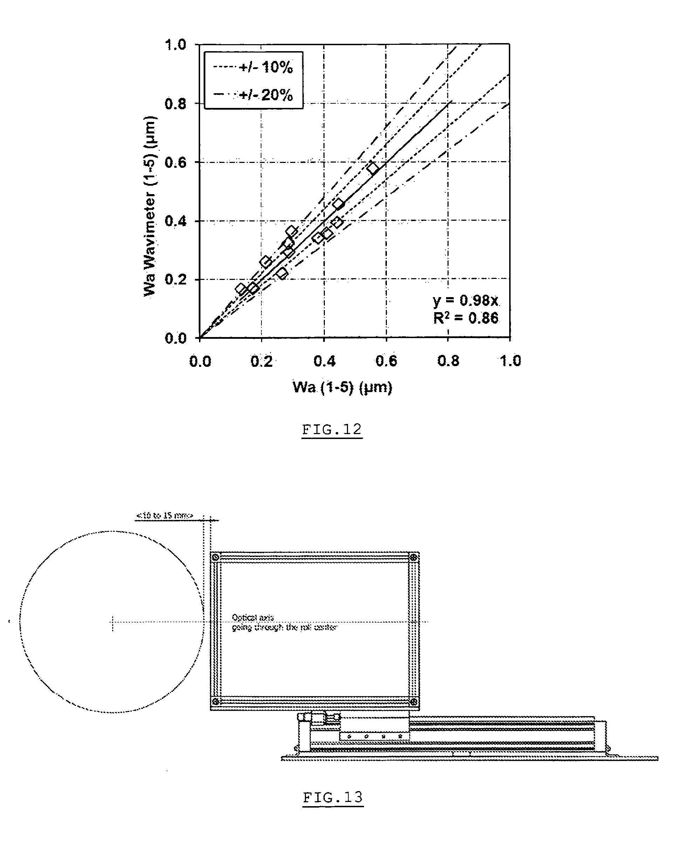

The global results for Ra calculated with a cut-off of 2.5mm are shown in FIG.11. The global results for Wa calculated with a low cut-off of 1mm and a high cut-off of 5 mm are shown in FIG.12.

These results validate the method in laboratory, either for the image stitching or for the image processing or for profile filtering. The precision is good (mainly in +/- 15%) and the correlation with mechanical stylus measurement as well.

8. Integrated online strip surface waviness measurements on a galvanising line (in plant)

8.1. *Mechanical mounting, adjustment of sensor*

In order to properly integrate the prototype in the line, some specifications were defined according to the device requirements and previous trials in plant:

- the optical axis of the device should pass through the centre of the roll in front of which it would be placed (FIG.13); working on a surface not in front of a roll is also possible if the level and frequency of the amplitude variation are not too high ;
- the sensor should be placed in such a way it does not have its own high amplitude vibration.

After installation, the global position is adjusted by using the distance sensor signal and the positioning tables supporting the core of the sensor. This signal is minimal when the optical axis is orthogonal to the roll surface.

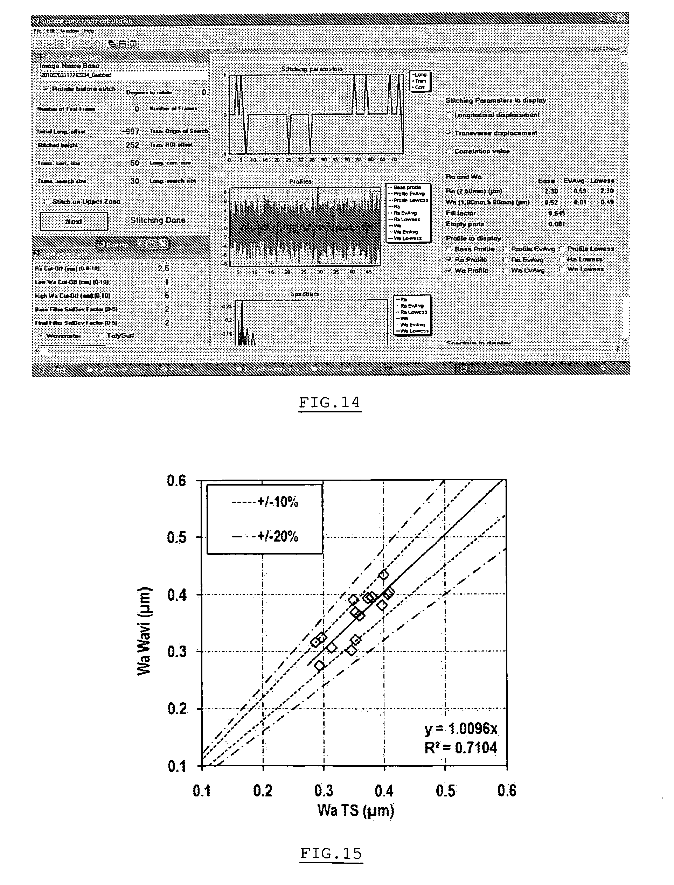

To facilitate the next adjustments of the sensor online some algorithms have been written (FIG.14). The first part of this software concerns stitching. A focus parameter is calculated on 6 regions of each image: upper left corner, upper mid part, upper right corner, lower left corner, lower mid part, lower right corner (not shown). The term "upper" means above the projected line, and "lower" below the line. The average on all the base images is also calculated for each zone. This helps to evaluate if the system is well focused.

Respective parameters "longitudinal displacement", "transverse displacement" and "correlation factor", concerning the stitching between 2 successive images are displayed in graphs (FIG.14). The longitudinal displacement is along rolling direction, the transverse one is perpendicular to rolling direction (the line is projected along rolling direction). This helps evaluating the quality of the stitching. If variations in displacement are present, it means either a bad original search region for stitching, but it can also be a problem of focus or quality of background image.

If transverse displacement is too high, it highlights a big inclination of the camera. This should be corrected by tilting the camera. Even with a small focus depth, the resulting image does not appear blurred. This solution improves the line quality but results in a small loss of precision in the measurement due to inclination. It is a compromise between a good fill factor and a better precision. The image processing had to be slightly adapted to take into account the inclination and the high product reflectivity.

The second part concerns profile analysis and so, also stitching. The line profile is searched by image processing in the stitched image and then analysed to get the Ra and the Wa profiles. Then, as already explained, the spectrums of these profiles are calculated to check if there is or not a peak at the length of stitching. It is recalled that the presence of this peak is significant of a misalignment of the projected line.

8.2. *Tail samples*

During plant measurement, samples taken from coils have been measured with a mechanical stylus reference profiler.

FIG.15 shows that a clear correlation appears and the variations is in +/-10% related to the Wa measured with a profiler Talysurf (TS Wa). The correlation factor is 0.71, and is influenced by the small range of data (from 0.28 to 0.42 µm).

8.3. *Validation of measurements on specific coils*

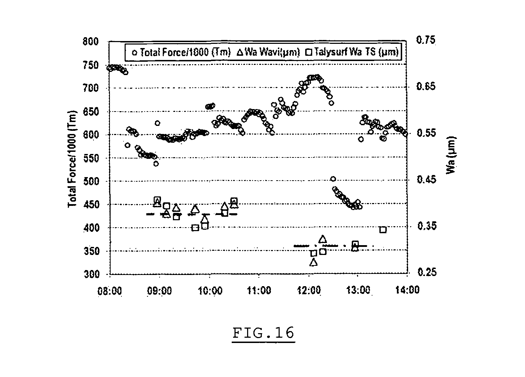

A lot of coils have been followed during the campaign. This has been used, coupled with samples at the end of coils to check the Wavimeter™ measurements in comparison with mechanical data during variation of production parameters such as the total force in skin pass (represented by circles in FIG.16). The triangles, corresponding to Wavimeter™ data, well follow the squares, corresponding to mechanical stylus data. This figure shows two well distinguished levels of Wa well followed by the Wavimeter™. This validates the measurement change according to variations due to process conditions.

**Claims**

**1.** A microscope sensor for carrying out a method for contactless measuring the waviness Wa, with a high cut-off value of 5 mm, of a moving surface, comprising:

- an industrial microscope having a magnification suitable to obtain an image field of view in the range of 1000 μm and/or a resolution of at least 0.5 μm, a working distance greater than 10 mm and a field depth greater than 15 μm ;
- a pulsed nanosecond laser source with a frequency of at least V/(FOV-O) in s$^{-1}$, where V is the maximum speed of the surface, in m/s, FOV is the field of view in the direction of movement, in m and O the overlapping between successive images in m, for emitting a beam through fibre optics so that to project a micrometric line superposed to a background illumination, said projected line being essentially parallel to the direction of movement ;
- a fibre coupling for coupling each fibre optic to the laser using a plano-convex lens designed to focus essentially all the laser beam into the core of the fibre ;
- a high speed matrix camera having at least the same frequency as the laser frequency, a field of view of at least 600 μm and suitable optics with a spatial resolution of preferably 0.5 μm ;
- focusing means comprising a distance sensor ;
- at least a high precision positioning table for focusing ;
- electronic control means for external synchronisation of the camera and the laser and for recalculating the frequency of the synchronisation signal in real time ;
- hardware and software means cooperating with the matrix camera for grabbing at high frequency a plurality of individual images of the moving surface with a side overlapping, each of said images being obtained, under an illumination background, by estimating a profile of the surface from the deformation of a laser line projected on the surface at a given angle and essentially parallel to the direction of movement ; for stitching successive images, and for line adjustment, so that to obtain a raw surface profile of minimal profile length defined by a high cut-off frequency value ; for filtering the raw surface profile, so that to separate roughness and waviness data and for calculating roughness and waviness parameters.

2. The sensor according to claim 1, **characterised in that** the means for filtering the profile comprise a Gaussian-like filter of "n" magnitude, n being an integer.

3. The sensor according to claim 1, **characterised in that** it comprises means for synchronizing the grabbing frequency with the speed of the moving surface.

4. The sensor according to claim 1, **characterised in that** the means for stitching successive images comprise a transformation model comprising a translation estimated between two consecutive images using a correlation technique and a FFT algorithm.

5. The sensor according to claim 4, **characterised in that** it comprises means for evaluating a translation vector comprising illumination background with subwindows which do not contain the laser line.

6. The sensor according to claim 1, **characterised in that** it comprises means for adjusting the directions of line projection and camera optical axis.

7. The sensor according to claim 6, **characterised in that** it comprises means for adjusting the camera orientation, so that the stitching displacement orthogonal to the movement direction is close to zero pixel.

8. The sensor according to claim 6, **characterised in that** it comprises means for adjusting the projected line to the movement direction comprising a high precision rotation table combined with a FFT analysis, so that to obtain extinction of the FFT peak at the length of stitching.

9. The sensor according to claim 1, **characterised in that** it comprises means for realising a homogeneous laser background and line projection illumination.

10. The sensor according to claim 1, **characterised in that** it comprises means for tilting the optical axis of the microscope sensor about the orthogonal to the surface by an angle in the range from 4 to 24 degrees, preferably from 12 to 18 degrees.

11. A method for contactless measuring the waviness (Wa) of a moving surface, based on the use of the microscope sensor according to anyone of the preceding claims, using a surface minimal profile length and respective low and high cut-off frequency values, said minimal profile length being at least 6 times the high cut-off value, the high cut-off value being equal to 5 mm, comprising the steps of:

- grabbing at high frequency, by means of a high speed camera, a plurality of individual images of the surface with a side overlapping, said images being obtained by means of a high resolution triangulation method in which, for each image, under an illumination background, a profile of the surface is estimated by the analysis of the deformation of a laser line projected on the surface at a given angle, said projected line being essentially parallel to the direction of movement ;

- stitching said plurality of images together to obtain a stitched image corresponding to a profile having a length of at least said minimal profile length ; and

- filtering said profile by analysis of the stitched image ; **characterised in that** the projected line is adjusted to the movement direction by use of a high precision rotation table combined with a FFT analysis, so that to obtain extinction of the FFT peak at the length of stitching.

**Patentansprüche**

1. Mikroskopsensor zum Durchführen eines Verfahrens für das kontaktlose Messen der Welligkeit Wa einer sich bewegenden Fläche mit einem hohen Grenzwert von 5 mm, umfassend:

    - ein industrielles Mikroskop mit einer Vergrößerung, die sich für den Erhalt eines Bildsichtfeldes im Bereich von 1000 $\mu$m und/oder einer Auflösung von zumindest 0,5 $\mu$m, einem Arbeitsabstand von mehr als 10 mm und einer Tiefenschärfe von mehr als 15 $\mu$m eignet;
    - eine gepulste Nanosekundenlaserquelle mit einer Frequenz von zumindest V / (FOV-O) in s$^{-1}$, wobei V die maximale Geschwindigkeit der Fläche in m/s ist, FOV das Sichtfeld in die Bewegungsrichtung in m ist und O die Überlappung zwischen fortlaufenden Bildern in m ist, zum Abgeben eines Strahls durch Faseroptiken, um eine mikrometrische Linie zu projizieren, die auf eine Hintergrundbeleuchtung überlagert ist, wobei die projizierte Linie im Wesentlichen parallel zur Bewegungsrichtung verläuft;
    - eine Faserkopplung zum Koppeln jeder Faseroptik mit dem Laser unter Verwendung einer plankonvexen Linse, die so ausgelegt ist, dass sie im Wesentlichen den gesamten Laserstrahl in den Kern der Faser fokussiert;
    - eine Hochgeschwindigkeits-Matrixkamera mit zumindest der gleichen Frequenz wie die Laserfrequenz, einem Sichtfeld von zumindest 600 $\mu$m und einer geeigneten Optik mit einer räumlichen Auflösung von vorzugsweise 0,5 $\mu$m;
    - Fokussiermittel, das einen Abstandssensor umfasst;
    - zumindest einen hochpräzisen Positioniertisch für eine Fokussierung;
    - ein elektronisches Steuermittel zum externen Synchronisieren der Kamera und des Lasers und zum Neuberechnen der Frequenz des Synchronisationssignals in Echtzeit;
    - ein Hardware- und Softwaremittel, das mit der Matrixkamera zusammenwirkt, zum Erfassen einer Mehrzahl von einzelnen Bildern der sich bewegenden Fläche mit hoher Frequenz und Seitenüberlappung, wobei jedes der Bilder unter einem Beleuchtungshintergrund erhalten wird, durch Schätzen eines Profils der Fläche anhand der Verformung einer Laserlinie, die in einem bestimmten Winkel und im Wesentlichen parallel zur Bewegungsrichtung auf die Fläche projiziert wird; zum Zusammenfügen fortlaufender Bilder und für eine Linienanpassung, um ein unbearbeitetes Flächenprofil minimaler Profillänge zu erhalten, die durch einen hohen Grenzfrequenzwert definiert wird; zum Filtern des unbearbeiteten Flächenprofils, um separate Rauigkeits- und Welligkeitsdaten zu erhalten, und zum Berechnen von Rauigkeits- und Welligkeitsparametern.

2. Sensor nach Anspruch 1, **dadurch gekennzeichnet, dass** das Mittel zum Filtern des Profils einen gaußähnlichen Filter in einer Größenordnung "n" umfasst, wobei n eine ganze Zahl ist.

3. Sensor nach Anspruch 1, **dadurch gekennzeichnet, dass** er ein Mittel zum Synchronisieren der Erfassungsfrequenz mit der Geschwindigkeit der sich bewegenden Fläche umfasst.

4. Sensor nach Anspruch 1, **dadurch gekennzeichnet, dass** das Mittel zum Zusammenfügen fortlaufender Bilder ein Transformationsmodell umfasst, das eine Translation umfasst, die zwischen zwei aufeinander folgenden Bildern unter Verwendung einer Korrelationstechnik und eines FFT-Algorithmus geschätzt wird.

5. Sensor nach Anspruch 4, **dadurch gekennzeichnet, dass** er ein Mittel zum Bewerten eines Translationsvektors umfasst, umfassend einen Beleuchtungshintergrund mit Teilfenstern, die die Laserlinie nicht enthalten.

6. Sensor nach Anspruch 1, **dadurch gekennzeichnet, dass** er ein Mittel zum Anpassen der Richtungen der Linienprojektion und der optischen Achse der Kamera umfasst.

7. Sensor nach Anspruch 6, **dadurch gekennzeichnet, dass** er ein Mittel zum Anpassen der Kameraausrichtung umfasst, so dass der Versatz des Zusammenfügens orthogonal zur Bewegungsrichtung nahe null Pixel ist.

8. Sensor nach Anspruch 6, **dadurch gekennzeichnet, dass** er ein Mittel zum Anpassen der projizierten Linie an eine Bewegungsrichtung umfasst, umfassend einen hochpräzisen Drehtisch, in Kombination mit einer FFT-Analyse, so dass eine Exstinktion des FFT-Peaks in der Länge der Zusammenfügung erhalten wird.

9. Sensor nach Anspruch 1, **dadurch gekennzeichnet, dass** er ein Mittel zum Umsetzen eines homogenen Laserhintergrunds und einer Linienprojektionsbeleuchtung umfasst.

10. Sensor nach Anspruch 1, **dadurch gekennzeichnet, dass** er ein Mittel zum Neigen der optischen Achse des Mikroskopsensors um die Orthogonale zur Oberfläche um einen Winkel im Bereich von 4 bis 24 Grad, vorzugsweise 12 bis 18 Grad, umfasst.

11. Verfahren zum kontaktlosen Messen der Welligkeit (Wa) einer sich bewegenden Oberfläche auf der Grundlage der Verwendung des Mikroskopsensors nach einem der vorstehenden Ansprüche unter Verwendung einer minimalen Flächenprofillänge und jeweiliger niedriger und hoher Grenzfrequenzwerte, wobei die minimale Profillänge zumindest 6 mal der hohe Grenzwert ist, wobei der hohe Grenzwert gleich 5 mm ist, das die Schritte umfasst:

- Erfassen einer Mehrzahl von einzelnen Bildern der Fläche mithilfe einer Hochgeschwindigkeitskamera mit hoher Frequenz und Seitenüberlappung, wobei die Bilder mithilfe eines Hochauflösungs-Triangulationsverfahren erhalten werden, bei dem für jedes Bild unter einem Beleuchtungshintergrund ein Profil der Fläche durch die Analyse der Verformung einer Laserlinie geschätzt wird, die in einem bestimmten Winkel auf die Fläche projiziert wird, wobei die projizierte Linie im Wesentlichen parallel zur Bewegungsrichtung verläuft;
- Zusammenfügen der Mehrzahl von Bildern, um ein zusammengefügtes Bild zu erhalten, das einem Profil mit einer Länge entspricht, die zumindest die minimale Profillänge ist; und
- Filtern des Profils durch Analysieren des zusammengefügten Bildes; **dadurch gekennzeichnet, dass** die projizierte Linie unter Verwendung eines hochpräzisen Drehtischs in Kombination mit einer FFT-Analyse an die Bewegungsrichtung angepasst wird, um eine Exstinktion des FFT-Peaks in der Länge der Zusammenfügung zu erhalten.

**Revendications**

1. Capteur de microscope pour mettre en oeuvre un procédé pour mesurer sans contact l'ondulation Wa, avec une valeur de coupure élevée de 5 mm, d'une surface en mouvement, comprenant :

- un microscope industriel ayant un grossissement approprié pour obtenir un champ de vision d'image dans la plage de 1000 $\mu$m et/ou une résolution d'au moins 0,5 $\mu$m, une distance de travail supérieure à 10 mm et une profondeur de champ supérieure à 15 $\mu$m;
- une source laser pulsée dans la plage des nanosecondes avec une fréquence d'au moins V/(FOV-O) en s$^{-1}$, où V est la vitesse maximum de la surface, en m/s, FOV est le champ de vision dans le sens du déplacement, en m, et O est la superposition entre les images successives, en m, pour émettre un faisceau à travers une fibre optique de manière à projeter un rayon micrométrique superposé à un rayonnement d'arrière-plan, ledit rayon projeté étant essentiellement parallèle à la direction du déplacement ;
- un raccord de fibre pour accoupler chaque fibre optique au laser en utilisant une lentille plan-convexe conçue pourfocaliser essentiellement tout le faisceau laser dans le coeur de la fibre ;
- une caméra matricielle à grande vitesse ayant au moins une fréquence identique à la fréquence du laser, un champ de vision d'au moins 600 $\mu$m et une optique appropriée avec une résolution spatiale de préférence de 0,5 $\mu$m ;
- des moyens de mise au point comprenant un capteur de distance ;
- au moins une table de positionnement de haute précision pour la mise au point ;
- des moyens de commande électroniques pour la synchronisation externe de la caméra et du laser et pour recalculer la fréquence du signal de synchronisation en temps réel ;
- des moyens matériels et logiciels coopérant avec la caméra matricielle pour capturer à une fréquence élevée une pluralité d'images individuelles de la surface en mouvement avec une superposition latérale, chacune desdites images étant obtenue, sous un rayonnement d'arrière-plan, en estimant un profil de la surface à partir de la déformation d'un rayon laser projeté sur la surface selon un angle donné et essentiellement parallèle à la direction de déplacement ; pour assembler des images successives, et pour l'ajustement de rayon, de manière à obtenir un profil de surface brut d'une longueur de profil minimale définie par une valeur de fréquence de coupure élevée ; pour filtrer le profil de surface brut, de manière à séparer les données de rugosité et d'ondulation et pour calculer des paramètres de rugosité et d'ondulation.

2. Capteur selon la revendication 1, **caractérisé en ce que** les moyens pour filtrer le profil comprennent un filtre du type gaussien d'une amplitude « n », n étant un entier.

3. Capteur selon la revendication 1, **caractérisé en ce qu'**il comprend des moyens pour synchroniser la fréquence de capture avec la vitesse de la surface en mouvement.

4. Capteur selon la revendication 1, **caractérisé en ce que** les moyens pour assembler des images successives comprennent un modèle de transformation comprenant une translation estimée entre deux images consécutives en utilisant une technique de corrélation et un algorithme de FFT.

5. Capteur selon la revendication 4, **caractérisé en ce qu'**il comprend des moyens pour évaluer un vecteur de translation comprenant un rayonnement d'arrière-plan avec des fenêtres secondaires qui ne contiennent pas le rayon laser.

6. Capteur selon la revendication 1, **caractérisé en ce qu'**il comprend des moyens pour ajuster les directions de la projection de rayon et de l'axe optique de la caméra.

7. Capteur selon la revendication 6, **caractérisé en ce qu'**il comprend des moyens pour ajuster l'orientation de la caméra, de sorte que le déplacement d'assemblage orthogonal à la direction de déplacement soit proche de zéro pixel.

8. Capteur selon la revendication 6, **caractérisé en ce qu'**il comprend des moyens pour ajuster le rayon projeté à la direction de déplacement comprenant une table de rotation de haute précision combinée avec une analyse de FFT, de manière à obtenir une extinction de la crête de FFT à la longueur de l'assemblage.

9. Capteur selon la revendication 1, **caractérisé en ce qu'**il comprend des moyens pour obtenir un rayonnement d'arrière-plan et de projection de rayon laser homogène.

10. Capteur selon la revendication 1, **caractérisé en ce qu'**il comprend des moyens pour incliner l'axe optique du capteur de microscope par rapport à l'orthogonale à la surface d'un angle compris entre 4 et 24 degrés, de préférence entre 12 et 18 degrés.

11. Procédé pour mesurer sans contact l'ondulation (Wa) d'une surface en mouvement, sur la base de l'utilisation du capteur de microscope selon l'une quelconque des revendications précédentes, en utilisant une longueur minimale de profil de surface et des valeurs de fréquence de coupure basse et haute respectives, ladite longueur de profil minimale étant au moins égale à 6 fois la valeur de coupure haute, la valeur de coupure haute étant égale à 5 mm, comprenant les étapes :

- de capture à fréquence élevée, au moyen d'une caméra à grande vitesse, d'une pluralité d'images individuelles de la surface avec une superposition latérale, lesdites images étant obtenues au moyen d'un procédé de triangulation à haute résolution dans lequel, pour chaque image, sous un rayonnement d'arrière-plan, un profil de la surface est estimé par l'analyse de la déformation d'un rayon laser projeté sur la surface selon un angle donné, ledit rayon projeté étant essentiellement parallèle à la direction de déplacement ;

- d'assemblage de ladite pluralité d'images les unes avec les autres pour obtenir une image assemblée correspondant à un profil ayant une longueur au moins égale à ladite longueur de profil minimale ; et

- de filtrage dudit profil par l'analyse de l'image assemblée ;

**caractérisé en ce que** le rayon projeté est ajusté à la direction de déplacement en utilisant une table de rotation de haute précision combinée avec une analyse de FFT, de manière à obtenir une extinction de la crête de FFT à la longueur de l'assemblage.

a)                                                                    b)

FIG.1

FIG.2

FIG.3

FIG.4

FIG.5

Image n      Image n+1      Stitched image

Recovering area

FIG.6

Stitching element

Image n

Image n+1

Strip

FIG.7

FIG.8

FIG.9

FIG.10

FIG.11

FIG.12

FIG.13

FIG.14

y = 1.0096x
R² = 0.7104

FIG.15

FIG.16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6307840 A
- US 6556945 B1
- DE 19932324 A1
- EP 1429114 A
- BE 1014971
- WO 02101366 A1
- EP 1806558 A
- BE 20020192

**Non-patent literature cited in the description**

- **G. MOREAS et al.** Advanced sensor for on-line topography in continuous lines. *Métallurgie-CIT,* May 2006, vol. 103, 233-237